# EUROPÄISCHE PATENTSCHRIFT

(11) **EP 3 255 256 B1**
(45) Veröffentlichungstag und Bekanntmachung des Hinweises auf die Patenterteilung: **03.10.2018**
(21) Anmeldenummer: 17171277.1
(22) Anmeldetag: 16.05.2017
(51) Int. Cl.: F01N 1/16, F01N 5/02

(54) **SCHALLDÄMPFER FÜR EINE ABGASANLAGE EINER BRENNKRAFTMASCHINE, INSBESONDERE FÜR KRAFTFAHRZEUGE MIT HYBRIDANTRIEB**
SILENCER FOR AN EXHAUST SYSTEM OF A COMBUSTION ENGINE, ESPECIALLY FOR MOTOR VEHICLES WITH HYBRID DRIVE
SILENCIEUX POUR UNE INSTALLATION DE GAZ D'ÉCHAPPEMENT D'UN MOTEUR À COMBUSTION INTERNE, EN PARTICULIER POUR VÉHICULES AUTOMOBILES ÉQUIPÉS DE MOTEUR HYBRIDE

(30) Priorität: 23.05.2016 DE 102016109388
(43) Veröffentlichungstag der Anmeldung: 13.12.2017
(73) Patentinhaber: Eberspächer Exhaust Technology GmbH & Co. KG, 66539 Neunkirchen (DE)
(72) Erfinder: KRÜGER, Jan, 73765 Neuhausen (DE); GAISER, Gerd, 72768 Reutlingen (DE)
(74) Vertreter: RLTG

(56) Entgegenhaltungen:
- EP-A1- 2 559 870
- EP-A2- 1 760 279
- JP-A- 2007 113 559
- US-B2- 9 306 143

## Beschreibung

Die vorliegende Erfindung betrifft einen Schalldämpfer für eine Abgasanlage einer Brennkraftmaschine, insbesondere betrifft die vorliegende Erfindung derartige Schalldämpfer, die in Kraftfahrzeugen mit Hybridantrieb in Zuordnung zu den dort eingesetzten Brennkraftmaschinen vorgesehen werden können.

Aus der DE 10 2012 104 396 A1 ist ein für eine Abgasanlage einer Brennkraftmaschine eines Kraftfahrzeugs aufgebauter Schalldämpfer bekannt, in welchen eine Wärmetauscheranordnung integriert ist, um in dem von der Brennkraftmaschine ausgestoßenen Verbrennungsabgas transportierte Wärme auf ein Wärmeträgermedium, beispielsweise die in einem Kühlmittelkreislauf einer Brennkraftmaschine strömende Kühlflüssigkeit, übertragen zu können. Der Schalldämpfer weist ein Einlassrohr und ein Auslassrohr auf. Dem Einlassrohr ist ein erstes Strömungsweg-Sperr/Freigabe-Organ zugeordnet, und der Wärmetauscheranordnung ist ein zweites Strömungsweg-Sperr/Freigabe-Organ zugeordnet. Diese beiden Strömungsweg-Sperr/Freigabe-Organe können abgestimmt aufeinander in derartige Sperr- bzw. Freigabestellungen gebracht werden, dass das über das Einlassrohr eintretende Verbrennungsabgas entweder einen ersten Strömungsweg nimmt, in welchem es zur Wärmeübertragung auf ein Wärmeträgermedium die Wärmetauscheranordnung durchströmt und nach Durchströmen der Wärmetauscheranordnung aus dem Auslassrohr austritt, oder zur Vermeidung einer derartigen Wärmeübertragungswechselwirkung zwischen dem Abgas und dem Wärmeträgermedium einen zweiten Strömungsweg nimmt, in welchem es die Wärmetauscheranordnung nicht durchströmt und nach Austritt aus dem Einlassrohr direkt und unter Umgehung der Wärmetauscheranordnung zum Auslassrohr strömt und aus diesem austritt.

Die EP 2 733 322 A1 offenbart einen Schalldämpfer mit einer in diesen integrierten Wärmetauscheranordnung. Der Schalldämpfer weist zwei Einlassrohre und ein Auslassrohr auf. Durch ein Strömungsweg-Sperr/Freigabe-Organ kann das die Brennkraftmaschine verlassende Abgas über ein erstes der Einlassrohre und somit einen ersten Strömungsweg geleitet werden, in welchem das Abgas die Wärmetauscheranordnung durchströmt und Wärme auf ein Wärmeträgermedium übertragen kann, bevor es über das Auslassrohr aus dem Schalldämpfer austritt. Bei anderer Stellung des Strömungsweg-Sperr/Freigabe-Organs wird das Abgas über das zweite der Einlassrohre zu einem zweiten Strömungsweg geleitet, in welchem es unter Umgehung der Wärmetauscheranordnung, also ohne thermische Wechselwirkung mit dem Wärmeträgermedium, zum Auslassrohr strömt und über dieses den Schalldämpfer verlässt.

Insbesondere bei Kraftfahrzeugen mit Hybridantrieb besteht einerseits das Problem, dass aufgrund der Unterbringung der Batterien im Bodenbereich der für eine Abgasanlage und insbesondere den bzw. die in diese integrierten Schalldämpfer zur Verfügung stehende Bauraum vergleichsweise beschränkt ist. Andererseits erfordern strenger werdende gesetzliche Anforderungen eine Verringerung der von einem derartigen Fahrzeug abgegebenen Geräusche, was wiederum den Einsatz größerer Schalldämpfer erforderlich macht. Des Weiteren sind die in Kraftfahrzeugen und insbesondere in Hybridantrieben eingesetzten Brennkraftmaschinen derart effizient, dass die im Verbrennungsbetrieb durch diese bereitgestellte Abwärme häufig nicht ausreicht, um einen Fahrzeuginnenraum ausreichend thermisch zu konditionieren. Der Einsatz von vergleichsweise groß bauenden Schalldämpfern mit in diese integrierten Wärmetauscheranordnungen zur Ausnutzung der im Verbrennungsabgas transportierten Wärme unter Berücksichtigung der auch vorhandenen Anforderung an die Schalldämpfungseigenschaften ist jedoch aufgrund der beengten Raumverhältnisse insbesondere im Bodenbereich derartiger Fahrzeuge schwierig.

Ein Schalldämpfer gemäß dem Oberbegriff des Anspruchs 1 ist aus der EP 2 559 870 A1 bekannt.

Es ist die Aufgabe der vorliegenden Erfindung, einen Schalldämpfer für eine Abgasanlage einer Brennkraftmaschine, insbesondere für Kraftfahrzeuge mit Hybridantrieb, bereitzustellen, welcher bei kompaktem Aufbau und guter Schalldämpfungscharakteristik die Ausnutzung der in Verbrennungsabgas transportierten Wärme ermöglicht.

Erfindungsgemäß wird diese Aufgabe gelöst durch einen Schalldämpfer für eine Abgasanlage einer Brennkraftmaschine, insbesondere für Kraftfahrzeuge mit Hybridantrieb, gemäß Anspruch 1. Dieser umfasst:
- ein Schalldämpfergehäuse,
- eine in dem Schalldämpfergehäuse angeordnete, von einem Wärmeträgermedium und Verbrennungsabgas durchströmbare Wärmetauscheranordnung zur Übertragung von Wärme von dem Verbrennungsabgas auf das Wärmeträgermedium,
- ein Verbrennungsabgas in das Schalldämpfergehäuse einleitendes Einlassrohr,
- ein Verbrennungsabgas aus dem Schalldämpfergehäuse ableitendes erstes Auslassrohr, wobei in dem Schalldämpfergehäuse ein erster Abgasströmungsweg zum Leiten von Verbrennungsabgas durch die Wärmetauscheranordnung zu dem ersten Auslassrohr vorgesehen ist,
- ein Verbrennungsabgas aus dem Schalldämpfergehäuse ableitendes zweites Auslassrohr, wobei in dem Schalldämpfergehäuse ein zweiter Abgasströmungsweg zum Leiten von Verbrennungsabgas unter Umgehung der Wärmetauscheranordnung zu dem zweiten Auslassrohr vorgesehen ist,
- eine Strömungsweg-Sperr/Freigabe-Anordnung zum wahlweisen Sperren und Freigeben wenigstens eines Abgasströmungsweges von erstem Abgasströmungsweg und zweitem Abgasströmungsweg.

Für ein gutes Schalldämpfungsverhalten einerseits und eine Aufzweigung der beiden Abgasströmungswege andererseits ist bei dem erfindungsgemäßen Schalldämpfer in dem Schalldämpfergehäuse eine erste Kammer vorgesehen, wobei das Einlassrohr zu der ersten Kammer offen ist. Der erste Abgasströmungsweg umfasst die erste Kammer und die Wärmetauscheranordnung weist einen zu der ersten Kammer offenen Abgaseintrittsbereich und einen zu dem ersten Auslassrohr offenen Abgasaustrittsbereich auf.

Bei dem erfindungsgemäßen Konzept eines Schalldämpfers sind die beiden Abgasströmungswege so gestaltet, dass, je nachdem, über welchen der Abgasströmungswege das Verbrennungsabgas geleitet wird, die Wärmetauscheranordnung entweder durchströmt oder umgangen wird und das Verbrennungsabgas den Schalldämpfer über verschiedene Auslassrohre verlässt. Dies gestattet es, bei kompakter Bauart den Schalldämpfer so auszugestalten, dass er hinsichtlich der Schalldämpfungseigenschaften die hierfür allgemein bestehenden Anforderungen erfüllen kann.

Um die in dem erfindungsgemäßen Schalldämpfer vorgesehenen Strömungswege gezielt freigeben bzw. sperren zu können, wird vorgeschlagen, dass die Strömungsweg-Sperr/Freigabe-Anordnung ein dem ersten Auslassrohr zugeordnetes Strömungsweg-Sperr/Freigabe-Organ umfasst, wobei das Strömungsweg-Sperr/Freigabe-Organ zwischen einer das erste Auslassrohr zur Durchströmung freigegebenen Freigabestellung und einer das erste Auslassrohr gegen Durchströmung im Wesentlichen sperrenden Sperrstellung verstellbar ist, wobei vorzugsweise das Strömungsweg-Sperr/Freigabe-Organ im ersten Auslassrohr in einem Bereich außerhalb des Schalldämpfergehäuses angeordnet ist, oder/und dass die Strömungsweg-Sperr/Freigabe-Anordnung ein dem zweiten Auslassrohr zugeordnetes Strömungsweg-Sperr/Freigabe-Organ umfasst, wobei das Strömungsweg-Sperr/Freigabe-Organ zwischen einer das zweite Auslassrohr zur Durchströmung freigegebenen Freigabestellung und einer das zweite Auslassrohr gegen Durchströmung im Wesentlichen sperrenden Sperrstellung verstellbar ist, wobei vorzugsweise das Strömungsweg-Sperr/Freigabe-Organ im zweiten Auslassrohr in einem Bereich außerhalb des Schalldämpfergehäuses angeordnet ist.

Weiter kann das Schalldämpfungsverhalten dadurch positiv beeinflusst werden, dass in dem Schalldämpfergehäuse eine zweite Kammer vorgesehen ist, wobei die zweite Kammer wenigstens teilweise mit Schalldämpfungsmaterial gefüllt ist, wobei vorzugsweise das Einlassrohr zu der zweiten Kammer offen ist. Um dabei eine effiziente Schalldämpfung durch Absorption zu unterstützen, wird vorgeschlagen, dass das Einlassrohr oder ein mit dem Einlassrohr verbundenes oder das Einlassrohr fortsetzendes Rohr die zweite Kammer durchsetzt und eine zu der zweiten Kammer offene Öffnungsanordnung aufweist.

Ferner kann vorgesehen sein, dass das zweite Auslassrohr oder ein mit dem zweiten Auslassrohr verbundenes oder das zweite Auslassrohr fortsetzendes Rohr zu der zweiten Kammer offen ist. Dabei kann eine baulich besonders einfach zu realisierende Ausgestaltung vorsehen, dass ein das Einlassrohr und das zweite Auslassrohr bereitstellendes Abgasrohr die erste Kammer und die zweite Kammer durchsetzt und vermittels der Öffnungsanordnung zu der zweiten Kammer offen ist.

Bei einer weiteren zur Verringerung der Schallemission vorteilhaften Ausgestaltung wird vorgeschlagen, dass in dem Schalldämpfergehäuse eine dritte Kammer vorgesehen ist, wobei das zweite Auslassrohr oder ein mit dem zweiten Auslassrohr verbundenes oder das zweite Auslassrohr fortsetzendes Rohr zu der dritten Kammer offen ist.

Zur Unterbringung der Wärmetauscheranordnung in dem Schalldämpfergehäuse kann vorgesehen sein, dass in dem Schalldämpfergehäuse eine die Wärmetauscheranordnung wenigstens teilweise enthaltende vierte Kammer vorgesehen ist, wobei die vierte Kammer im Bereich des Abgaseintrittsbereichs zu der ersten Kammer offen ist und das erste Auslassrohr oder ein mit dem ersten Auslassrohr verbundenes oder das erste Auslassrohr fortsetzendes Rohr im Bereich des Abgasaustrittsbereichs zu der vierten Kammer offen ist. Somit wird eine definierte Abgasführung von der ersten Kammer durch die vierte Kammer zum ersten Auslassrohr gewährleistet, wobei gleichzeitig in der vierten Kammer das Abgas die Wärmetauscheranordnung durchströmt bzw. umströmt und dabei Wärme auf das in dieser auch zirkulierende Wärmeträgermedium überträgt.

Zur Bereitstellung einer Helmholtz-Resonator-Funktionalität wird vorgeschlagen, dass das Einlassrohr oder ein mit dem Einlassrohr verbundenes oder das Einlassrohr fortsetzendes Rohr über ein davon abzweigendes Abzweigrohr zu der ersten Kammer offen ist. Bei diesem Aufbau kann weiterhin zur Verbesserung der Schalldämpfungscharakteristik vorgesehen sein, dass das zweite Auslassrohr oder ein mit dem zweiten Auslassrohr verbundenes oder das zweite Auslassrohr fortsetzendes Rohr über eine Öffnungsanordnung zu der dritten Kammer offen ist.

Dabei kann die Strömungsweg-Sperr/Freigabe-Anordnung ein dem ersten Auslassrohr zugeordnetes Strömungsweg-Sperr/Freigabe-Organ umfassen. Ist dieses Strömungsweg-Sperr/Freigabe-Organ in seiner Sperrstellung, sperrt es das erste Auslassrohr gegen Durchströmung, so dass zwangsweise auch kein Verbrennungsabgas durch die Wärmetauscheranordnung strömen kann, sondern das gesamte über das Einlassrohr in den Schalldämpfer eingeleitete Verbrennungsabgas den Schalldämpfer über das grundsätzlich zur Durchströmung freigegebene zweite Auslassrohr verlässt.

Bei einer alternativen Ausgestaltung kann vorgesehen sein, dass das Einlassrohr oder ein mit dem Einlassrohr verbundenes oder das Einlassrohr fortsetzendes Rohr zu der ersten Kammer über eine Öffnungsanordnung offen ist. Dabei gelangt das Verbrennungsabgas über die Öffnungsanordnung, also allgemein eine Perforation, des Einlassrohrs oder eines dieses fortsetzenden Rohrs in die erste Kammer und über die erste Kammer zur Wärmetauscheranordnung. Um auch bei diesem Aufbau die Funktionalität eines Helmholtz-Resonators bereitstellen zu können, wird weiter vorgeschlagen, dass das zweite Auslassrohr oder ein mit dem zweiten Auslassrohr verbundenes oder das zweite Auslassrohr fortsetzendes Rohr über ein davon abzweigendes Abzweigrohr zu der dritten Kammer offen ist.

Bei dieser Ausgestaltung ist vorteilhafterweise ein Strömungsweg-Sperr/FreigabeOrgan der Strömungsweg-Sperr/Freigabe-Anordnung dem zweiten Auslassrohr zugeordnet. Ist dieses Strömungsweg-Sperr/Freigabe-Organ in seiner Sperrstellung, sperrt es das zweite Auslassrohr gegen Durchströmung, so dass zwangsweise das über das Einlassrohr in den Schalldämpfer gelangende Verbrennungsabgas über die Öffnungsanordnung in die erste Kammer und von dieser zur Wärmetauscheranordnung und somit zum ersten Auslassrohr geleitet wird.

Da aus Gründen der kompakten Bauweise derartige Schalldämpfer im Allgemeinen in Richtung einer Schalldämpfer-Längsachse langgestreckt ausgebildet sind, wird weiter vorgeschlagen, dass die erste Kammer und die zweite Kammer in Richtung einer Schalldämpfergehäuse-Längsachse aufeinanderfolgend angeordnet sind. Insbesondere kann bei derartiger Bauart vorgesehen sein, dass die zweite Kammer in Richtung der Schalldämpfergehäuse-Längsachse zwischen der ersten Kammer und der dritten Kammer angeordnet ist.

Um eine bei geringer Bauraumbeanspruchung gleichzeitig die verschiedenen Ausgestaltungsmerkmale eines Schalldämpfers zum Bereitstellen einer guten Schalldämpfungscharakteristik, insbesondere einer Helmholtz-Resonator-Funktionalität, zuzulassen, wird weiter vorgeschlagen, dass die zweite Kammer und die vierte Kammer in Richtung einer Schalldämpfergehäuse-Längsachse wenigstens bereichsweise nebeneinander angeordnet sind. An zumindest einer axialen Seite der zweiten Kammer bzw. vierten Kammer kann dann beispielsweise in der ersten Kammer oder in der dritten Kammer durch Bereitstellung eines Helmholtz-Resonators eine effiziente Schalldämpfung erreicht werden.

Ferner betrifft die vorliegende Erfindung eine Abgasanlage für ein Fahrzeug, insbesondere mit Hybridantrieb, umfassend einen erfindungsgemäß aufgebauten Schalldämpfer.

Die Erfindung wird nachfolgend mit Bezug auf die beiliegenden Figuren detailliert beschrieben. Es zeigt:
- Fig. 1: eine Prinzip-Schnittdarstellung eines Schalldämpfers mit integrierter Wärmetauscheranordnung;
- Fig. 2: eine der Fig. 1 entsprechende Darstellung eines Schalldämpfers mit integrierter Wärmetauscheranordnung gemäß einer alternativen Ausgestaltungsart.

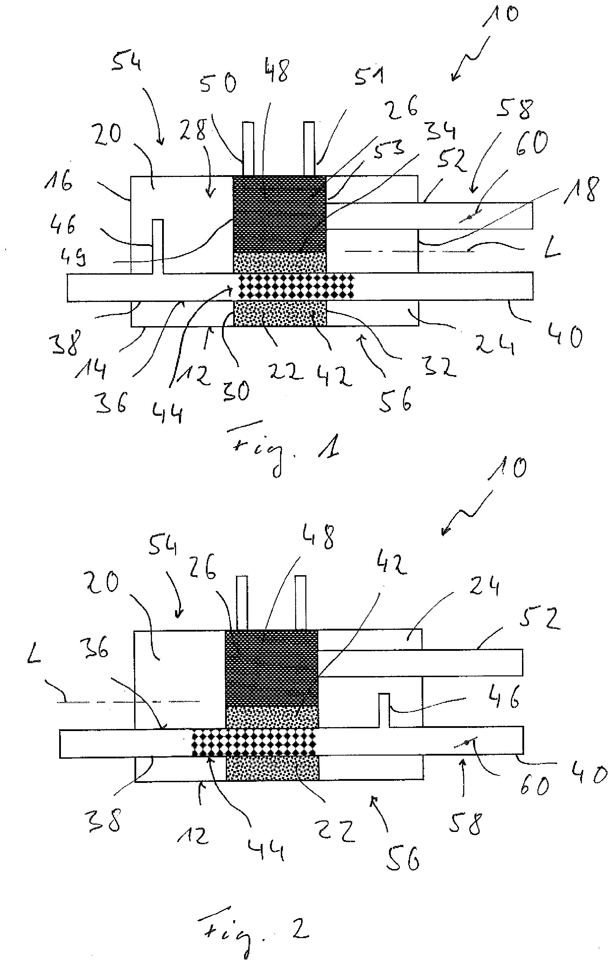

In Fig. 1 ist ein zur Integration in eine Abgasanlage eines beispielsweise mit Hybridantrieb aufgebauten Fahrzeugs vorgesehener Schalldämpfer allgemein mit 10 bezeichnet. Dieser Schalldämpfer ist in der Abgasanlage stromabwärts von im Allgemeinen zur Abgasreinigung vorgesehenen Systembereichen, wie z.B. Katalysator oder/und Partikelfilter, und stromaufwärts wenigstens eines Nach-Schalldämpfers angeordnet.

Der Schalldämpfer 10 umfasst ein Schalldämpfergehäuse 12, das beispielsweise in Richtung einer Schalldämpfergehäuse-Längsachse L langgestreckt ausgebildet ist und eine im Wesentlichen zylindrische Umfangswandung 14 mit beispielsweise runder oder elliptischer Querschnittsgeometrie aufweisen kann. An den beiden axialen Endbereichen ist das Schalldämpfergehäuse 12 durch mit der Umfangswandung 14 beispielsweise durch Verschweißung oder in sonstiger Weise gasdicht verbundene Stirnwandungen 16, 18 abgeschlossen.

Im Inneren des Schalldämpfergehäuses 12 sind bei der in Fig. 1 dargestellten Ausgestaltungsform insgesamt vier Kammern 20, 22, 24, 26 gebildet. Die erste Kammer 20 ist an einer Einlassseite des Schalldämpfergehäuses 12 angeordnet. Die erste Kammer 20 kann beispielsweise den gesamten Querschnitt des Schalldämpfergehäuses 12 bzw. des Innenraums 28 des Schalldämpfergehäuses 12 einnehmen. Axial anschließend an die erste Kammer 20 ist die zweite Kammer 22 vorgesehen, welche durch eine Zwischenwandung 30 von der ersten Kammer 20 getrennt sein kann und welche nur einen Teilbereich des Querschnitts des Innenraums 28 einnimmt. Axial folgend auf die zweite Kammer 22 ist die dritte Kammer 24 angeordnet, welche von der zweiten Kammer 22 durch eine Zwischenwandung 32 getrennt sein kann und, sowie auch die erste Kammer 20, wiederum den gesamten Querschnitt des Innenraums 28 einnehmen kann.

In Richtung der Schalldämpfergehäuse-Längsachse L neben der zweiten Kammer 22 und somit auch zwischen der ersten Kammer 20 und der dritten Kammer 24 ist die vierte Kammer 26 angeordnet. Die vierte Kammer 26 kann durch die Zwischenwandungen 30, 32 von der ersten Kammer 20 bzw. der zweiten Kammer 24 getrennt sein. Grundsätzlich könnten die Kammern 22, 26 jedoch auch durch diesen jeweils eigenständig zugeordnete Zwischenwandungen von der ersten Kammer 20 bzw. der dritten Kammer 24 getrennt sein. Ferner ist die vierte Kammer 26 durch eine Zwischenwandung 34 von der zweiten Kammer 22 getrennt, so dass grundsätzlich zwischen diesen beiden Kammern 22, 26 keine Strömungsverbindung besteht.

Ein allgemein mit 36 bezeichnetes Abgasrohr stellt in seinem auch die erste Kammer 20 durchsetzenden Bereich ein Einlassrohr 38 bereit, welches die Stirnwandung 16 durchsetzt und über welches das eine Brennkraftmaschine verlassende Verbrennungsabgas in den Innenraum 28 des Schalldämpfergehäuses 12 eingeleitet wird. In einem auch die dritte Kammer 24 durchsetzenden Bereich stellt das Abgasrohr 36 ein Auslassrohr 40 bereit, welches die Stirnwandung 18 durchsetzt und über welches das über das Einlassrohr 38 zugeführte Abgas den Schalldämpfer 10 verlassen kann. Das Abgasrohr 36 durchsetzt die Zwischenwandungen 30, 32 und ist somit auch durch die zweite Kammer 22 hindurchgeführt. Die zweite Kammer 22 ist mit beispielsweise faserartigem, schaumstoffartigem oder porösem Schalldämpfungsmaterial 42 gefüllt, welches das Abgasrohr 36 in seinem die zweite Kammer 22 durchsetzenden Bereich umgibt. In diesem die zweite Kammer 22 durchsetzenden Bereich und einem Teilbereich des die dritte Kammer 24 durchsetzenden Längenbereichs ist das Abgasrohr 36 mit einer Öffnungsanordnung 44, im Allgemeinen auch als Perforation bezeichnet, ausgebildet und ist somit über eine Vielzahl von Öffnungen einerseits zur zweiten Kammer 22 und andererseits zur dritten Kammer 24 offen.

In dem in der ersten Kammer 20 sich erstreckenden Längenbereich des Abgasrohrs 36, also beispielsweise dem als Einlassrohr 38 zu interpretierenden Längenbereich, zweigt von dem Abgasrohr 36 ein Abzweigrohr 46 seitlich ab. Dieses erstreckt sich somit im Wesentlichen quer zur Schalldämpfergehäuse-Längsachse L und ist zur zweiten Kammer 20 offen, so dass über das Einlassrohr 38 zugeführtes Abgas in die erste Kammer 20 eintreten kann.

Es sei hier darauf hingewiesen, dass das die Kammer 20, 22, 24 durchsetzende Abgasrohr 36 als ein integrales Rohrstück ausgebildet sein kann. Grundsätzlich könnten das Einlassrohr 38 und das Auslassrohr 40 jedoch auch als voneinander separat ausgebildete, miteinander verbundene oder miteinander über ein weiteres Rohr verbundene Bauteile bereitgestellt sein. Ferner können das Einlassrohr 38 und das Auslassrohr 40 in denjenigen Längenbereichen, in welchen sie die Stirnwandungen 16, 18 durchsetzen, über diese Stirnwandungen 16, 18 hinaus aus dem Innenraum 28 des Schalldämpfergehäuses 12 geführt sein, so wie in Fig. 12 dargestellt. Alternativ könnte das Einlassrohr 38 oder/und das Auslassrohr 40 auch im Bereich einer davon jeweils durchsetzten Stirnwand 16, 18 enden und dort nach außen hin durch ein weiteres Rohr fortgesetzt sein.

In der vierten Kammer 26 ist eine allgemein mit 48 bezeichnete Wärmetauscheranordnung vorgesehen. Die durch einen Wärmeträgermediumeinlass 50 kann Wärmeträgermedium, beispielsweise die Kühlflüssigkeit einer Brennkraftmaschine, in die Wärmetauscheranordnung 48 einströmen. Über einen Wärmeträgermediumauslass 51 kann das Wärmeträgermedium die Wärmetauscheranordnung 48 verlassen. Im Inneren der Wärmetauscheranordnung 48 ist ein von dem Wärmeträgermedium durchströmbares Volumen, beispielsweise bereitgestellt in einer Vielzahl von Kanälen, vorgesehen. Die Wärmetauscheranordnung 48 ist vorteilhafterweise in die durch die Umfangswandung 14, die beiden Zwischenwandungen 30, 32 und die Zwischenwandung 34 umgrenzte vierte Kammer 26 eingesetzt, kann alternativ jedoch auch selbst zumindest eine dieser Zwischenwandungen bzw. einen Teil der Umfangswandung 14 bereitstellen.

Um eine Wärmeübertragungswechselwirkung zwischen dem in die erste Kammer 20 eingeleiteten Verbrennungsabgas und dem durch die Wärmetauscheranordnung 48 hindurchströmenden Wärmeträgermedium zu ermöglichen, ist die Wärmetauscheranordnung 48 bzw. die Zwischenwandung 30 in ihrem die vierte Kammer 26 begrenzenden Bereich zur ersten Kammer 20 offen. Beispielsweise könnte in diesem Bereich in der Zwischenwandung 30 eine Mehrzahl von Öffnungen vorgesehen sein, über welche hindurch das in die erste Kammer 20 einströmende Verbrennungsabgas in einem Abgaseintrittsbereich 49 in dafür vorgesehene Volumenbereiche in der Wärmetauscheranordnung 48 einströmen kann, um im Verbrennungsabgas transportierte Wärme auf das in dem Wärmeträgermedium-Strömungsvolumen der Wärmetauscheranordnung 48 strömende Wärmeträgermedium zu übertragen.

Ein weiteres Auslassrohr 52 durchsetzt die Stirnwandung 18 und die dritte Kammer 24 und ist beispielsweise im Bereich der Zwischenwandung 32 zur vierten Kammer 26 offen. Das über die erste Kammer 20 zur Durchströmung der Wärmetauscheranordnung 48 in die vierte Kammer 26 einströmende Verbrennungsabgas kann nach Durchströmung bzw. Umströmung der Wärmetauscheranordnung 48 die vierte Kammer 26 bzw. die Wärmetauscheranordnung über einen Abgasaustrittsbereich 53 über das Auslassrohr 52 verlassen.

Es wird darauf hingewiesen, dass im Folgenden das Auslassrohr 40 als zweites Auslassrohr bezeichnet wird und das Auslassrohr 52 als erstes Auslassrohr bezeichnet wird.

Unter Verwendung des einzigen Einlassrohrs 38 und der beiden Auslassrohre 40, 52 sind im Schalldämpfer 10 zwei Abgasströmungswege 54, 56 gebildet. Über den ersten Abgasströmungsweg 54 strömt das über das Einlassrohr 38 in den Innenraum 28, insbesondere die erste Kammer 20 eintretende Verbrennungsabgas durch die vierte Kammer 26 und somit die Wärmetauscheranordnung 48 hindurch und verlässt den Innenraum 28 über das erste Auslassrohr 52. Der zweite Abgasströmungsweg 56 führt das über das Einlassrohr 38 in den Innenraum 28 des Schalldämpfergehäuses 12 geführte Abgas unter Umgehung der Wärmetauscheranordnung 48 und somit unter Vermeidung einer Wärmeübertragungswechselwirkung zwischen dem im zweiten Abgasströmungsweg 56 strömenden Verbrennungsabgas und dem Wärmeträgermedium zum zweiten Auslassrohr 40 und verlässt über dieses den Innenraum 28 des Schalldämpfergehäuses 12.

Der Schalldämpfer 10 umfasst ferner eine dem ersten Abgasströmungsweg 54 zugeordnete Strömungsweg-Sperr/Freigabe-Anordnung 58. Diese kann beispielsweise ein in das erste Auslassrohr 52 vorzugsweise an einen Bereich außerhalb des Schalldämpfergehäuses 12 integriertes Strömungsweg-Sperr/Freigabe-Organ 60, beispielsweise eine schwenkbare Klappe, umfassen. Das Strömungsweg-Sperr/Freigabe-Organ 60 ist zwischen einer das erste Auslassrohr 52 und somit den ersten Abgasströmungsweg 54 im Wesentlichen gegen die Durchströmung mit Verbrennungsabgas sperrenden Sperrstellung und einer das erste Auslassrohr 52 und damit den ersten Abgasströmungsweg 54 zur Durchströmung freigebenden Freigabestellung verstellbar. Dabei kann das Strömungsweg-Sperr/Freigabe-Organ 60 so verstellbar sein, dass es entweder die Sperrstellung oder die Freigabestellung einnehmen kann, oder dass es neben diesen beiden Stellungen auch noch Zwischenstellungen einnehmen kann, vorzugsweise zwischen diesen beiden Stellungen kontinuierlich verstellbar ist, um entsprechend kontinuierlich die Verdämmung des ersten Abgasströmungswegs 54 und somit den über diesen strömenden Anteil des Verbrennungsabgases einstellen zu können. Es sei hier darauf hingewiesen, dass das Strömungsweg-Sperr/Freigabe-Organ durch einen entsprechenden Stellantrieb, beispielsweise einen Elektromotor oder dergleichen, zwischen den verschiedenen Stellungen verstellt werden kann. Dem zweiten Abgasströmungsweg 56 ist kein derartiges Strömungsweg-Sperr/FreigabeOrgan zugeordnet, so dass dieser grundsätzlich zur Durchströmung freigegeben ist.

Nachfolgend wird der Betrieb des in Fig. 1 dargestellten Schalldämpfers 10 besch rieben.

In Abhängigkeit von dem in einem Fahrzeug auftretenden Wärmebedarf oder/und dem Betriebszustand einer Brennkraftmaschine wird der Schalldämpfer 10 so eingesetzt, dass durch die wahlweise Freigabe bzw. Sperrung bzw. teilweise Sperrung des ersten Abgasströmungswegs 54 der Anteil des über diesen ersten Strömungsweg 54 strömenden Verbrennungsabgases variiert wird. Besteht ein vergleichsweise großer Wärmebedarf, soll also eine vergleichsweise große Wärmemenge von dem Verbrennungsabgas auf das die Wärmetauscheranordnung 48 durchströmende Wärmeträgermedium übertragen werden, so wird das Strömungsweg-Sperr/Freigabe-Organ 60 in seine Freigabestellung gebracht, in welcher der erste Abgasströmungsweg 54 grundsätzlich zur Durchströmung freigegeben ist, also die durch die Strömungsweg-Sperr/Freigabe-Anordnung 58 generierte Verdämmung minimal ist. In diesem Zustand sind beide Abgasströmungswege 54, 56 freigegeben, und das über das Einlassrohr 38 eintretende Verbrennungsabgas verlässt den Schalldämpfer 10 über die beiden Auslassrohre 52, 40 und wird über diese beispielsweise zu dem bereits angesprochenen Nach-Schalldämpfer geleitet. Dabei überträgt das im ersten Abgasströmungsweg 54 strömende Verbrennungsabgas Wärme auf das die Wärmetauscheranordnung 46 durchströmende Wärmeträgermedium, welche in einer weiteren Wärmetauscheranordnung genutzt werden kann, beispielsweise um die in den Fahrzeuginnenraum einzuleitende Luft zu erwärmen.

Besteht kein oder nur geringer Wärmebedarf, wird das Strömungsweg-Sperr/Freigabe-Organ 60 in seine Sperrstellung gebracht oder in eine den zweiten Abgasströmungsweg 54 stärker verdämmende Stellung gebracht, so dass kein oder nur ein geringerer Anteil des Verbrennungsabgases durch den zweiten Abgasströmungsweg 54 strömt, beispielsweise das gesamte Verbrennungsabgas den Schalldämpfer 10 über den zweiten Abgasströmungsweg 56 durchströmt und somit auch nur über das zweite Auslassrohr 40 Verbrennungsabgas zu weiter stromabwärts liegenden Systembereichen einer Abgasanlage geleitet wird. Dabei bildet das Einlassrohr 38 bzw. das von diesem abzweigende Abzweigrohr 46 in der ersten Kammer 20 einen Helmholtz-Resonator, dessen Resonatorvolumen im Wesentlichen bis zu dem beispielsweise in seiner Sperrstellung positionierten Strömungsweg-Sperr/Freigabe-Organ 60 reicht. Dieses Volumen wird vorteilhafterweise so gewählt, dass eine Abstimmung der Resonanzfrequenz des so aufgebauten Helmholtz-Resonators auf besonders störende tiefe Frequenzen erreicht wird.

Einen weiteren Beitrag zur Schalldämpfung liefert die mit dem Schalldämpfungsmaterial 42 gefüllte zweite Kammer 22, die somit als Absorptionskammer wirksam ist und insbesondere für die Minderung hoher Frequenzen, beispielsweise erzeugt durch das Strömungsrauschen, wirksam ist. Gleichzeitig ist durch die bauliche Trennung des zweiten Abgasströmungswegs 56 von der Wärmetauscheranordnung 48, insbesondere auch die isolierende Wirkung der zweiten Kammer 22 bzw. des darin angeordneten Schalldämpfungsmaterials 42, eine thermische Isolation zu der Wärmetauscheranordnung 48 vorgesehen, so dass in diesem Zustand dafür gesorgt wird, dass eine thermische Überlastung der Wärmetauscheranordnung vermieden wird und gleichzeitig die Erwärmung des die Wärmetauscheranordnung 48 durchströmenden Wärmeträgermediums weitestgehend vermieden wird.

Dieser Betriebszustand wird vorzugsweise dann gewählt, wenn einerseits zu hohe Abgastemperaturen zu einer Überlastung der Wärmetauscheranordnung führen könnten, also beispielsweise im Volllastzustand bzw. bei Nenndrehzahl einer Brennkraftmaschine, oder wenn aufgrund einer geringen in dem Verbrennungsabgas transportierten Wärmemenge eine effiziente Erwärmung des Wärmeträgermediums in der Wärmetauscheranordnung 48 nicht erreicht werden kann und somit der Schalldämpfungsfunktionalität Vorrang gegeben wird. Dies kann beispielsweise in einem Betriebszustand mit geringer Drehzahl, beispielsweise Leerlaufdrehzahl, der Fall sein, in welchem vor allem auch eine Dämpfung tiefer Frequenzen durch den Helmholtz-Resonator erforderlich ist.

Der vorangehend beschriebene Zustand, in welchem auch der erste Abgasströmungsweg 54 zur Durchströmung freigegeben ist, wird aufgrund der in diesem Zustand durch das geöffnete erste Abgasrohr 52 nur bedingt erreichbaren Helmholtz-Resonator-Funktionalität vorzugsweise dann gewählt, wenn einerseits eine effiziente Ausnutzung der im Verbrennungsabgas transportierten Wärme ohne der Gefahr einer Überhitzung der Wärmetauscheranordnung 48 möglich ist, andererseits eine geringere Anforderung an das Schalldämpfungsvermögen bestehen. Dies ist im Allgemeinen ein Zustand, in welchem eine Brennkraftmaschine im Bereich mittlerer Drehzahlen bzw. mittlerer Motorlast betrieben wird.

Es sei darauf hingewiesen, dass die in Fig. 1 dargestellte Ausgestaltungsform beispielsweise auch dahingehend variiert werden kann, dass auf die dritte Kammer 24 verzichtet wird, sofern die Anforderungen an die Schalldämpfung dies zulassen. Dies führt zu einer noch kompakteren Bauweise des Schalldämpfers 10.

Die in Fig. 2 dargestellte Ausgestaltungsform entspricht hinsichtlich des Grundaufbaus und der beiden Abgasströmungswege im Wesentlichen der vorangehend mit Bezug auf die Fig. 1 beschriebenen Ausgestaltungsform. Auch bei diesem Schalldämpfer 10 führt der erste Abgasströmungsweg 54 das über das einzige Einlassrohr 38 in das Schalldämpfergehäuse 12, insbesondere die erste Kammer 20 eingeleitete Abgas durch die vierte Kammer 26 und somit die Wärmetauscheranordnung 48 hindurch zum ersten Auslassrohr 52. Der zweite Abgasströmungsweg 56 führt das über das Einlassrohr 38 zugeführte Abgas unter Umgehung der Wärmetauscheranordnung 48 durch die erste Kammer 20, die zweite Kammer 22 und die dritte Kammer 24 hindurch zum zweiten Auslassrohr 40.

Um das bzw. einen Teil des Verbrennungsabgases in die erste Kammer 20 einleiten zu können, ist die am Abgasrohr 36 insbesondere im Bereich der zweiten Kammer 22 vorgesehene Öffnungsanordnung 40 bis in den Bereich des Abgasrohrs 36 bzw. des Einlassrohrs 38 ausgedehnt, der sich in der ersten Kammer 20 erstreckt, so dass das Verbrennungsabgas bzw. ein Teil davon über einen Teil der Öffnungen der Öffnungsanordnung 44 in die erste Kammer 20 und über diese zur Wärmetauscheranordnung 48 strömen kann.

In dem in der dritten Kammer 24 sich erstreckenden Längenbereich des Abgasrohrs 36 bzw. des zweiten Auslassrohrs 40 zweigt davon ein Abzweigrohr 46 ab, das somit in Zusammenwirkung mit der zweiten Kammer 24 einen Helmholtz-Resonator bereitstellt.

Die Strömungsweg-Sperr/Freigabe-Anordnung 58 umfasst bei dieser Ausgestaltungsart ein dem zweiten Strömungsweg 56 zugeordnetes, beispielsweise im zweiten Auslassrohr 40 vorzugsweise in einem Bereich außerhalb des Wärmetauschergehäuses 12 angeordnetes Strömungsweg-Sperr/Freigabe-Organ 60, beispielsweise in Form einer verstellbaren Klappe. Auch dieses Strömungsweg-Sperr/Freigabe-Organ 60 ist zwischen einer das zweite Auslassrohr 40 gegen Durchströmung im Wesentlichen sperrenden Sperrstellung und einer das zweite Auslassrohr 40 und damit den zweiten Abgasströmungsweg 56 zur Durchströmung freigebenden Freigabestellung verstellbar. Auch bei dieser Ausgestaltungsvariante kann eine Verstellung nur mit diesen beiden Stellungen erfolgen oder eine kontinuierliche Verstellung, um entsprechend kontinuierlich oder ggf. auch stufenweise die Verdämmung des zweiten Abgasströmungswegs 56 und somit den Anteil des über diesen strömenden Verbrennungsabgases einstellen zu können.

Wird das Strömungsweg-Sperr/Freigabe-Organ 60 in seine Sperrstellung gebracht und somit beispielsweise der zweite Abgasströmungsweg 56 im Bereich des zweiten Auslassrohrs 40 gegen Durchströmung gesperrt, strömt das gesamte über das Einlassrohr 38 zugeführte Verbrennungsabgas in die erste Kammer 20 und über diese in die vierte Kammer 26. Das Verbrennungsabgas durchströmt die Wärmetauscheranordnung 48 und überträgt somit Wärme auf das diese ebenfalls durchströmende Wärmeträgermedium. Das Verbrennungsabgas verlässt den Schalldämpfer 10 über das erste Auslassrohr 52, welches bei dieser Ausgestaltungsart nicht gegen Durchströmung sperrbar ist. In diesem Zustand ist der mit dem Abzweigrohr 46 im Bereich der dritten Kammer 24 bereitgestellte Helmholtz-Resonator besonders effizient zur Schalldämpfung wirksam, wobei auch hier vorteilhafterweise die Resonanzfrequenz des Helmholtz-Resonators auf störende tiefe Frequenzen abgestimmt ist. Auch bei dieser Ausgestaltungsart wird der Betriebszustand, in welchem das Verbrennungsabgas bzw. ein wesentlicher Teil des Verbrennungsabgases über den ersten Abgasströmungsweg 54 und somit durch die Wärmetauscheranordnung 48 geleitet wird, vorteilhafterweise dann gewählt, wenn eine Brennkraftmaschine in einem Zustand ist, in welchem besonders tiefe Frequenzen dominant sind und somit nicht zu dämpfen sind, also beispielsweise in einem Leerlaufzustand oder einem Zustand mit Teillast bzw. geringer oder mittlerer Drehzahl.

Wird das Strömungsweg-Sperr/Freigabe-Organ 60 in seine Freigabestellung gebracht, so wird auch der zweite Abgasströmungsweg 56 zur Durchströmung freigegeben. Das über das Einlassrohr 38 zugeführte Verbrennungsabgas kann den Schalldämpfer 10 somit über beide Auslassrohre 52, 40 verlassen. Aufgrund des geringeren Strömungswiderstandes wird in diesem Zustand der größere Teil des Verbrennungsabgases über den zweiten Abgasströmungsweg 56 strömen. Dies bedeutet, dass in der Wärmetauscheranordnung 48 nur noch eine geringere Wärmemenge auf das diese auch durchströmende Wärmeträgermedium übertragen wird. Besonders vorteilhaft wird dieser Zustand dann genutzt, wenn beispielsweise bei hoher Drehzahl oder hoher Motorlast einerseits nur die Übertragung einer geringeren Wärmemenge auf das Wärmeträgermedium erforderlich ist, da bereits durch die Brennkraftmaschine selbst bzw. deren thermische Wechselwirkung mit dem Wärmeträgermedium ausreichend Wärmeenergie bereitgestellt werden kann, so dass überdies eine thermische Überlastung der Wärmetauscheranordnung 48 vermieden wird, und andererseits die Dämpfung besonders niedriger Frequenzen nur in geringerem Ausmaß erforderlich ist. Durch das Vorhandensein der mit dem Schalldämpfungsmaterial 42 gefüllten zweiten Kammer 22 werden gleichwohl insbesondere hohe Frequenzen, wie z. B. das Strömungsrauschen, effizient gedämpft.

Bei beiden vorangehend beschriebenen Ausgestaltungsformen kann dann, wenn das dort jeweils vorgesehene Strömungsweg-Sperr/Freigabe-Organ in eine Zwischenstellung gebracht wird, unter Berücksichtigung weiterer Betriebsparameter, wie z. B. der Fahrzeuggeschwindigkeit und der Außentemperatur, eine noch feinfühligere Abstimmung des Schalldämpfers einerseits hinsichtlich seines Schalldämpfungsverhaltens und andererseits hinsichtlich seines Wärmeübertragungsverhaltens vorgenommen werden. Beide Ausgestaltungsvarianten bieten den substantiellen Vorteil, dass bei kompakter Bauweise durch Integration der Wärmetauscheranordnung einerseits und verschiedener Schalldämpfungsmaßnahmen andererseits die im Verbrennungsabgas transportierte Wärme erforderlichenfalls effizient genutzt werden kann, andererseits dafür gesorgt werden kann, dass, abhängig vom Betriebszustand, eine effiziente Dämpfung des im Abgas transportierten Schalls bereitgestellt wird. Insbesondere besteht die Möglichkeit, durch Bereitstellung einer Helmholtz-Resonator-Funktionalität insbesondere bei niedrigen Drehzahlen bzw. Betriebslasten niedrigere Frequenzen effizient zu dämpfen, während die insbesondere auch durch das Strömungsrauschen auftretenden höheren Frequenzen sehr effizient durch das in der als Absorptionskammer wirksamen zweiten Kammer vorgesehene Schalldämpfungsmaterial gedämpft werden können.

Ferner weist der erfindungsgemäße Schalldämpfer 10 den wesentlichen Vorteil auf, dass durch das Bereitstellen zweier Auslassrohre der im Schalldämpfer generierte Gegendruck im Vergleich zu einem Schalldämpfer mit nur einem einzigen Auslassrohr deutlich geringer ist, was sich positiv auf den Abgasstrom und somit das Leistungsvermögen einer Brennkraftmaschine auswirkt.

## Patentansprüche

1. Schalldämpfer für eine Abgasanlage einer Brennkraftmaschine, insbesondere für Kraftfahrzeuge mit Hybridantrieb, umfassend:
- ein Schalldämpfergehäuse (12) mit einer darin vorgesehenen ersten Kammer (20),
- eine in dem Schalldämpfergehäuse (12) angeordnete, von einem Wärmeträgermedium und Verbrennungsabgas durchströmbare Wärmetauscheranordnung (48) zur Übertragung von Wärme von dem Verbrennungsabgas auf das Wärmeträgermedium,
- ein Verbrennungsabgas in das Schalldämpfergehäuse (12) einleitendes Einlassrohr (38),
- ein Verbrennungsabgas aus dem Schalldämpfergehäuse (12) ableitendes erstes Auslassrohr (52), wobei die Wärmetauscheranordnung (48) einen zu dem ersten Auslassrohr (52) offenen Abgasaustrittsbereich (53) aufweist und in dem Schalldämpfergehäuse (12) ein erster Abgasströmungsweg (54) zum Leiten von Verbrennungsabgas durch die Wärmetauscheranordnung (48) zu dem ersten Auslassrohr (52) vorgesehen ist,
- ein Verbrennungsabgas aus dem Schalldämpfergehäuse (12) ableitendes zweites Auslassrohr (40), wobei in dem Schalldämpfergehäuse (12) ein zweiter Abgasströmungsweg (56) zum Leiten von Verbrennungsabgas unter Umgehung der Wärmetauscheranordnung (48) zu dem zweiten Auslassrohr (40) vorgesehen ist,
- eine Strömungsweg-Sperr/Freigabe-Anordnung (58) zum wahlweisen Sperren und Freigeben wenigstens eines Abgasströmungsweges (54, 56) von erstem Abgasströmungsweg (54) und zweitem Abgasströmungsweg (56),
**dadurch gekennzeichnet,**
**dass** der erste Abgasströmungsweg (54) die erste Kammer (20) umfasst, wobei das Einlassrohr (38) zu der ersten Kammer (20) offen ist und die Wärmetauscheranordnung (48) einen zu der ersten Kammer (20) offenen Abgaseintrittsbereich (49) aufweist.

2. Schalldämpfer nach Anspruch 1, **dadurch gekennzeichnet, dass** die Strömungsweg-Sperr/Freigabe-Anordnung (58) ein dem ersten Auslassrohr (52) zugeordnetes Strömungsweg-Sperr/Freigabe-Organ (58) umfasst, wobei das Strömungsweg-Sperr/Freigabe-Organ (60) zwischen einer das erste Auslassrohr (52) zur Durchströmung freigegebenen Freigabestellung und einer das erste Auslassrohr (52) gegen Durchströmung im Wesentlichen sperrenden Sperrstellung verstellbar ist, wobei vorzugsweise das Strömungsweg-Sperr/Freigabe-Organ (60) im ersten Auslassrohr (52) in einem Bereich außerhalb des Schalldämpfergehäuses (12) angeordnet ist, oder/und
dass die Strömungsweg-Sperr/Freigabe-Anordnung (58) ein dem zweiten Auslassrohr (40) zugeordnetes Strömungsweg-Sperr/Freigabe-Organ (60) umfasst, wobei das Strömungsweg-Sperr/Freigabe-Organ (60) zwischen einer das zweite Auslassrohr (40) zur Durchströmung freigegebenen Freigabestellung und einer das zweite Auslassrohr (40) gegen Durchströmung im Wesentlichen sperrenden Sperrstellung verstellbar ist, wobei vorzugsweise das Strömungsweg-Sperr/Freigabe-Organ (60) im zweiten Auslassrohr (40) in einem Bereich außerhalb des Schalldämpfergehäuses (12) angeordnet ist, oder/und
dass in dem Schalldämpfergehäuse (12) eine zweite Kammer (22) vorgesehen ist, wobei die zweite Kammer (22) wenigstens teilweise mit Schalldämpfungsmaterial (42) gefüllt ist, und dass vorzugsweise das Einlassrohr (38) zu der zweiten Kammer (22) offen ist, vorzugsweise wobei das Einlassrohr (38) oder ein mit dem Einlassrohr (38) verbundenes oder das Einlassrohr (38) fortsetzendes Rohr die zweite Kammer (22) durchsetzt und eine zu der zweiten Kammer (22) offene Öffnungsanordnung (44) aufweist.

3. Schalldämpfer nach Anspruch 2, **dadurch gekennzeichnet, dass** das zweite Auslassrohr (40) oder ein mit dem zweiten Auslassrohr (40) verbundenes oder das zweite Auslassrohr (40) fortsetzendes Rohr zu der zweiten Kammer (22) offen ist.

4. Schalldämpfer nach Anspruch 2 und 3, **dadurch gekennzeichnet, dass** ein das Einlassrohr (38) und das zweite Auslassrohr (40) bereitstellendes Abgasrohr (36) die erste Kammer (20) und die zweite Kammer (22) durchsetzt und vermittels der Öffnungsanordnung (44) zu der zweiten Kammer (22) offen ist.

5. Schalldämpfer nach Anspruch 2, 3 oder 4, **dadurch gekennzeichnet, dass** in dem Schalldämpfergehäuse (12) eine dritte Kammer (24) vorgesehen ist, wobei das zweite Auslassrohr (40) oder ein mit dem zweiten Auslassrohr (40) verbundenes oder das zweite Auslassrohr (40) fortsetzendes Rohr zu der dritten Kammer (24) offen ist.

6. Schalldämpfer nach einem der Ansprüche 1-5, **dadurch gekennzeichnet, dass** in dem Schalldämpfergehäuse (12) eine die Wärmetauscheranordnung (48) wenigstens teilweise enthaltende vierte Kammer (26) vorgesehen ist, wobei die vierte Kammer (26) im Bereich des Abgaseintrittsbereichs zu der ersten Kammer (20) offen ist und das erste Auslassrohr (52) oder ein mit dem ersten Auslassrohr (52) verbundenes oder das erste Auslassrohr (52) fortsetzendes Rohr im Bereich des Abgasaustrittsbereichs (53) zu der vierten Kammer (26) offen ist.

7. Schalldämpfer nach einem der Ansprüche 1-6, **dadurch gekennzeichnet, dass** das Einlassrohr (38) oder ein mit dem Einlassrohr (38) verbundenes oder das Einlassrohr (38) fortsetzendes Rohr über ein davon abzweigendes Abzweigrohr (46) zu der ersten Kammer (20) offen ist.

8. Schalldämpfer nach Anspruch 5 und Anspruch 7, **dadurch gekennzeichnet, dass** das zweite Auslassrohr (40) oder ein mit dem zweiten Auslassrohr (40) verbundenes oder das zweite Auslassrohr (40) fortsetzendes Rohr über eine Öffnungsanordnung (44) zu der dritten Kammer (24) offen ist.

9. Schalldämpfer nach einem der Ansprüche 1-6, , **dadurch gekennzeichnet, dass** das Einlassrohr (38) oder ein mit dem Einlassrohr (38) verbundenes oder das Einlassrohr (38) fortsetzendes Rohr zu der ersten Kammer (20) über eine Öffnungsanordnung (44) offen ist, vorzugsweise wobei die Strömungsweg-Sperr/Freigabe-Anordnung (58) ein dem zweiten Auslassrohr (40) zugeordnetes Strömungsweg-Sperr/Freigabe-Organ (60) umfasst.

10. Schalldämpfer nach Anspruch 5 und Anspruch 9, **dadurch gekennzeichnet, dass** das zweite Auslassrohr (40) oder ein mit dem zweiten Auslassrohr (40) verbundenes oder das zweite Auslassrohr (40) fortsetzendes Rohr über ein davon abzweigendes Abzweigrohr (46) zu der dritten Kammer (24) offen ist, vorzugsweise wobei die Strömungsweg-Sperr/Freigabe-Anordnung (58) ein dem zweiten Auslassrohr (40) zugeordnetes Strömungsweg-Sperr/FreigabeOrgan (60) umfasst.

11. Schalldämpfer nach Anspruch 2 oder einem der Ansprüche 3-10, sofern auf Anspruch 2 rückbezogen, **dadurch gekennzeichnet, dass** die erste Kammer (20) und die zweite Kammer (22) in Richtung einer Schalldämpfergehäuse-Längsachse (L) aufeinander folgend angeordnet sind.

12. Schalldämpfer nach Anspruch 5 und Anspruch 11, **dadurch gekennzeichnet, dass** die zweite Kammer (22) in Richtung der Schalldämpfergehäuse-Längsachse (L) zwischen der ersten Kammer (20) und der dritten Kammer (24) angeordnet ist.

13. Schalldämpfer nach Anspruch 5 und Anspruch 6 oder einem der Ansprüche 7-12, sofern auf Anspruch 5 und Anspruch 6 rückbezogen, **dadurch gekennzeichnet, dass** die zweite Kammer (22) und die vierte Kammer (26) in Richtung einer Schalldämpfergehäuse-Längsachse (L) wenigstens bereichsweise nebeneinander angeordnet sind.

14. Abgasanlage für ein Fahrzeug, umfassend einen Schalldämpfer (10) nach einem der vorangehenden Ansprüche.

15. Abgasanlage nach Anspruch 14, **dadurch gekennzeichnet, dass** der Schalldämpfer (10) stromaufwärts bezüglich wenigstens eines weiteren Schalldämpfers angeordnet ist.

## Claims

1. Muffler for an exhaust gas system of an internal combustion engine, especially for motor vehicles with hybrid drive, comprising
- a muffler housing (12) with a first chamber (20) provided therein,
- a heat exchanger arrangement (48), which is arranged in the muffler housing (12) and through which a heat transfer medium and combustion exhaust gas can flow, for transferring heat from the combustion exhaust gas to the heat transfer medium,
- an inlet pipe (38) introducing combustion exhaust gas into the muffler housing (12),
- a first outlet pipe (52) drawing combustion exhaust gas from the muffler housing (12), wherein the heat exchanger arrangement (48) comprises an exhaust gas outlet area (53) open towards the first outlet pipe (52) and wherein a first exhaust gas flow path (54) is provided in the muffler housing (12) for routing combustion exhaust gas through the heat exchanger arrangement (48) to the first outlet pipe (52),
- a second outlet pipe (40) drawing combustion exhaust gas from the muffler housing (12), wherein a second exhaust gas flow path (56) is provided in the muffler housing (12) for routing combustion exhaust gas, bypassing the heat exchanger arrangement (48) to the second outlet pipe (40), and
- a flow path blocking/releasing arrangement (58) for selectively blocking and releasing at least one exhaust gas flow path (54, 56) of a first exhaust gas flow path (54) and a second exhaust gas flow path (56),
**characterized in that**
the first exhaust gas flow path (54) comprises the first chamber (20), wherein the inlet pipe (38) is open towards the first chamber (20) and the heat exchanger arrangement (48) comprises an exhaust gas inlet area (49) open towards the first chamber (20).

2. Muffler in accordance with claim 1, **characterized in that** the flow path blocking/releasing arrangement (58) comprises a flow path blocking/releasing member (58) associated with the first outlet pipe (52), wherein the flow path blocking/releasing member (60) is adjustable between a released position releasing the first outlet pipe (52) for flow and a blocked position essentially blocking the first outlet pipe (52) against flow, wherein preferably the flow path blocking/releasing member (60) is arranged in the first outlet pipe (52) in an area outside the muffler housing (12),
or/and
the flow path blocking/releasing arrangement (58) comprises a flow path blocking/releasing member (60) associated with the second outlet pipe (40), wherein the flow path blocking/releasing member (60) is adjustable between a released position releasing the second outlet pipe (40) for flow and a blocked position essentially blocking the second outlet pipe (40) against flow, wherein the flow path blocking/releasing member (60) is preferably arranged in the second outlet pipe (40) in an area outside the muffler housing (12),
or/and
**in that** a second chamber (22) is provided in the muffler housing (12), wherein the second chamber (22) is filled at least partly with muffling material (42), and that preferably the inlet pipe (38) is open towards the second chamber (22), preferably wherein the inlet pipe (38) or a pipe connected to the inlet pipe (38) or forming an extension of the inlet pipe (38) passes through the second chamber (22) and has an opening arrangement (44) that is open towards the second chamber (22).

3. Muffler in accordance with claim 2, **characterized in that** the second outlet pipe (40) or a pipe connected to the second outlet pipe (40) or forming an extension of the second outlet pipe (40) is open towards the second chamber (22).

4. Muffler in accordance with claims 2 and 3, **characterized in that** an exhaust pipe (36) providing the inlet pipe (38) and the second outlet pipe (40) passes through the first chamber (20) and the second chamber (22) and is open towards the second chamber (22) by means of the opening arrangement (44).

5. Muffler in accordance with claims 2, 3 or 4, **characterized in that** a third chamber (24) is provided in the muffler housing (12), wherein the second outlet pipe (40) or a pipe connected to the second outlet pipe (40) or forming an extension of the second outlet pipe (40) is open towards the third chamber (24).

6. Muffler in accordance with one of claims 1-5, **characterized in that** a fourth chamber (26) at least partially containing the heat exchanger arrangement (48) is provided in the muffler housing (12), wherein the fourth chamber (26) is open in the area of the exhaust gas inlet area towards the first chamber (20) and the first outlet pipe (52) or a pipe connected to the first outlet pipe (52) or forming an extension of the first outlet pipe (52) is open towards the fourth chamber (26) in the area of the exhaust gas outlet area (53).

7. Muffler in accordance with one of claims 1-6, **characterized in that** the inlet pipe (38) or a pipe connected to the inlet pipe (38) or forming an extension of the inlet pipe (38) is open towards the first chamber (20) via a branch pipe (46) branching off therefrom.

8. Muffler in accordance with claim 5 and claim 7, **characterized in that** the second outlet pipe (40) or a pipe connected to the second outlet pipe (40) or forming an extension of the second outlet pipe (40) is open towards the third chamber (24) via an opening arrangement (44).

9. Muffler in accordance with one of claims 1-6, **characterized in that** the inlet pipe (38) or a pipe connected to the inlet pipe (38) or forming an extension of the inlet pipe (38) is open towards the first chamber (20) via an opening arrangement (44), wherein preferably the flow path blocking/releasing arrangement (58) comprises a flow path blocking/releasing member (60) associated with the second outlet pipe (40).

10. Muffler in accordance with claim 5 and claim 9, **characterized in that** the second outlet pipe (40) or a pipe connected to the second outlet pipe (40) or forming an extension of the second outlet pipe (40) is open towards the third chamber (24) via a branch pipe (46) branching off therefrom, preferably wherein the flow path blocking/releasing arrangement (58) comprises a flow path blocking/releasing member (60) associated with the second outlet pipe (40).

11. Muffler in accordance with claim 2 or one of the claims 3-10, if referred back to claim 2, **characterized in that** the first chamber (20) and the second chamber (22) are arranged following one another in the direction of the muffler housing longitudinal axis (L).

12. Muffler in accordance with claim 5 and claim 11, **characterized in that** the second chamber (22) is arranged between the first chamber (20) and the third chamber (24) in the direction of the muffler housing longitudinal axis (L).

13. Muffler in accordance with claim 5 and claim 6 or one of the claims 7-12, if referred back to claim 5 and claim 6, **characterized in that** the second chamber (22) and the fourth chamber (26) are arranged next to one another in at least some areas in the direction of the muffler housing longitudinal axis (L).

14. Exhaust gas system for a vehicle, comprising a muffler (10) in accordance with one of the above claims.

15. Exhaust gas system in accordance with claim 14, **characterized in that** the muffler (10) is arranged upstream in relation to at least one further muffler.

## Revendications

1. Silencieux pour un système de gaz d'échappement d'un moteur à combustion interne, en particulier pour des véhicules avec propulsion hybride, comprenant :
- un boîtier de silencieux (12) avec une première chambre (20) prévue là-dedans,
- un arrangement d'échangeur de chaleur (48) arrangé dans le boîtier de silencieux (12) par lequel peuvent s'écouler un médium caloporteur et des gaz d'échappement de combustion, pour transférer la chaleur du gaz d'échappement de combustion au médium caloporteur,
- un tube d'entrée (38) introduisant du gaz d'échappement de combustion dans le boîtier de silencieux (12),
- un premier tube de sortie (52) évacuant du gaz d'échappement de combustion du boîtier de silencieux (12), où l'arrangement d'échangeur de chaleur (48) comprend une région de sortie de gaz d'échappement (53) ouverte vers le premier tube de sortie (52) et où une première voie d'écoulement de gaz d'échappement (54) est prévue dans le boîtier de silencieux (12) pour guider du gaz d'échappement de combustion à travers l'arrangement d'échangeur de chaleur (48) vers le premier tube de sortie (52),
- un deuxième tube de sortie (40) évacuant du gaz d'échappement de combustion du boîtier de silencieux (12), où une deuxième voie d'écoulement de gaz d'échappement (56) est prévue dans le boîtier de silencieux (12) pour guider du gaz d'échappement de combustion vers le deuxième tube de sortie (40) en évitant l'arrangement d'échangeur de chaleur (48),
- un arrangement de blocage/libération de voie d'écoulement (58) pour bloquer ou libérer sélectivement au moins une voie d'écoulement de gaz d'échappement (54, 56) parmi la première voie d'écoulement de gaz d'échappement (54) et la deuxième voie d'écoulement de gaz d'échappement (56),
**caractérisé en ce que**
la première voie d'écoulement de gaz d'échappement (54) comprend la première chambre (20), le tube d'entrée (38) étant ouvert vers la première chambre (20), et l'arrangement d'échangeur de chaleur (48) comprenant une région d'entrée de gaz d'échappement (49) ouverte vers la première chambre (20).

2. Silencieux selon la revendication 1, **caractérisé en ce que** l'arrangement de blocage/libération de voie d'écoulement (58) comprend un premier membre de blocage/libération de voie d'écoulement (58) associé au premier tube de sortie (52), le membre de blocage/libération de voie d'écoulement (60) étant réglable entre une position de libération libérant le passage par le premier tube de sortie (52) et une position de blocage bloquant essentiellement le passage par le premier tube de sortie (52), où de préférence le membre de blocage/libération de voie d'écoulement (60) est arrangé dans le premier tube de sortie (52) dans une région hors du boîtier de silencieux (12),
ou/et
**en ce que** l'arrangement de blocage/libération de voie d'écoulement (58) comprend un membre de blocage/libération de voie d'écoulement (60) associé au deuxième tube de sortie (40), le membre de blocage/libération de voie d'écoulement (60) étant réglable entre une position de libération libérant le passage par le deuxième tube de sortie (40) et une position de blocage bloquant essentiellement le passage par le deuxième tube de sortie (40), où de préférence le membre de blocage/libération de voie d'écoulement (60) est arrangé dans le deuxième tube de sortie (40) dans une région hors du boîtier de silencieux (12),
ou/et
**en ce qu'**une deuxième chambre (22) est prévue dans le boîtier de silencieux (12), la deuxième chambre (22) étant au moins partiellement remplie de matériau insonorisant (42) et de préférence **en ce que** de manière préférée le tube d'entrée (38) est ouverte vers la deuxième chambre (22), le tube d'entrée (38) ou un tube connecté au tube d'entrée (38) ou prolongeant le tube d'entrée (38) passant à travers la deuxième chambre (22) et comprenant un arrangement d'ouverture (44) ouvert vers la deuxième chambre (22).

3. Silencieux selon la revendication 2, **caractérisé en ce que** le deuxième tube de sortie (40) ou un tube connecté au tube de sortie (40) ou prolongeant le tube de sortie (40) est ouvert vers la deuxième chambre (22).

4. Silencieux selon les revendications 2 ou 3, **caractérisé en ce qu'**un tube de gaz d'échappement (36) formant le tube d'entrée (38) et le deuxième tube de sortie (40) passe à travers la première chambre (20) et la deuxième chambre (22) et est ouvert vers la deuxième chambre (22) par l'arrangement d'ouverture (44).

5. Silencieux selon les revendications 2, 3 ou 4 **caractérisé en ce qu'**une troisième chambre (24) est prévue dans le boîtier de silencieux (12), le deuxième tube de sortie (40) ou un tube connecté au tube de sortie (40) ou prolongeant le tube de sortie (40) étant ouvert vers la troisième chambre (24).

6. Silencieux selon une des revendications 1-5, **caractérisé en ce qu'**une quatrième chambre (26) est prévue dans le boîtier de silencieux (12) comprenant au moins en partie l'arrangement d'échangeur de chaleur (48), la quatrième chambre (26) étant ouverte vers la première chambre (20) dans la région de l'entrée du gaz d'échappement et le premier tube de sortie (52) ou un tube connecté au premier tube de sortie (52) ou prolongeant le premier tube de sortie (52) est ouvert vers la quatrième chambre (26) dans la région de sortie de gaz d'échappement (53).

7. Silencieux selon une des revendications 1-6, **caractérisé en ce que** le tube d'entrée (38) ou un tube connecté au tube d'entrée (38) ou prolongeant le tube d'entrée (38) est ouvert vers la première chambre (20) par un tube de branchement (46) débranchant de ce dernier.

8. Silencieux selon la revendication 5 ou la revendication 7, **caractérisé en ce que** le deuxième tube de sortie (40) ou un tube connecté au tube de sortie (40) ou prolongeant le tube de sortie (40) est ouvert vers la troisième chambre (24) par un arrangement d'ouverture (44).

9. Silencieux selon une des revendications 1-6, **caractérisé en ce que** le tube d'entrée (38) ou un tube connecté au tube d'entrée (38) ou prolongeant le tube d'entrée (38) est ouvert vers la première chambre (20) par un arrangement d'ouverture (44), où de préférence l'arrangement de blocage/libération de voie d'écoulement (58) comprend un membre de blocage/libération de voie d'écoulement (60) associé au deuxième tube de sortie (40).

10. Silencieux selon la revendication 5 et la revendication 9, **caractérisé en ce que** le deuxième tube de sortie (40) ou un tube connecté au deuxième tube de sortie (40) ou prolongeant le deuxième tube de sortie (40) est ouvert vers la troisième chambre (24) par un tube de branchement (46) débranchant de ce dernier, de préférence où l'arrangement de blocage/libération de voie d'écoulement (58) comprend un membre de blocage/libération de voie d'écoulement (60) associé au deuxième tube de sortie (40).

11. Silencieux selon la revendication 2 ou une des revendications 3-10, si elles se réfèrent à la revendication 2, **caractérisé en ce que** la première chambre (20) et la deuxième chambre (22) sont arrangées successivement dans le sens d'un axe longitudinal (L) du boîtier de silencieux.

12. Silencieux selon la revendication 5 et la revendication 11, **caractérisé en ce que** la deuxième chambre (22) est arrangée dans le sens d'un axe longitudinal (L) du boîtier de silencieux entre la première chambre (20) et la troisième chambre (24).

13. Silencieux selon la revendication 5 et la revendication 6 ou une des revendications 7-12, si elles se réfèrent à la revendication 5 et la revendication 6, **caractérisé en ce que** la deuxième chambre (22) et la quatrième chambre (26) sont arrangées au moins en partie l'une à côté de l'autre dans le sens d'un axe longitudinal (L) du boîtier de silencieux.

14. Système de gaz d'échappement pour un véhicule, comprenant un silencieux (10) selon une des revendications précédentes.

15. Système de gaz d'échappement selon la revendication 14, **caractérisé en ce que** le silencieux (10) est arrangé en amont par rapport à au moins un autre silencieux.
